(19) Europäisches Patentamt
European Patent Office
Office européen des brevets

(11) **EP 2 919 132 A1**

(12) **EUROPEAN PATENT APPLICATION**

(43) Date of publication:
**16.09.2015 Bulletin 2015/38**

(51) Int Cl.:
*G06F 17/30* (2006.01)  *G06F 11/36* (2006.01)

(21) Application number: **14158651.1**

(22) Date of filing: **10.03.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **periplus instruments GmbH & Co. KG 64283 Darmstadt (DE)**

(72) Inventor: **Ehmke, Dierk 64283 Darmstadt (DE)**

(74) Representative: **Betten & Resch Patent- und Rechtsanwälte PartGmbB Theatinerstraße 8 (Fünf Höfe) 80333 München (DE)**

(54) **Method for automatic generation of test data for testing a data warehouse system**

(57)     A method for the automatic generation of test data for testing a data warehouse system is provided, comprising the steps of obtaining a source code of the data warehouse system to be tested, transforming the source code into an intermediate representation, analysing the intermediate representation to obtain a flow graph and a set of constraints associated with nodes of the flow graph, determining one or more flow paths in the flow graph, determining as combined constraints for each flow path the constraints associated with the nodes of the flow path combined by logical conjunction, and generating test data that meet the combined constraints of at least one of the one or more flow paths.

Fig. 1

```
                    Start

110    Obtaining source code from a data
       warehouse application to be tested

120    Transforming the source code into
       an intermediate representation

130    Analyzing the intermediate representation to obtain a
       flow graph and a set of constraints

140    Determining one or more flow paths in the flow graph

150    Determining as combined constraints for each of the
       flow paths the constraints associated with the nodes
       of the flow path combined by logical conjunction

160    Generating test data that meet the combined
       constraints of at least one of the one or more flow
       paths

                    End
```

EP 2 919 132 A1

**Description**

**FIELD OF THE INVENTION**

The present technology relates a method and apparatus for the automatic generation of test data for testing a data warehouse system.

**BACKGROUND OF THE INVENTION**

A data warehouse is a specific database system for integrating data from one or more disparate data sources, providing a central repository of the integrated data, performing analysis of the integrated data, and providing reporting about analysis results. The infrastructure providing the fundamental capabilities of a data warehouse is herein referred to as "data warehouse system". The programs for performing data integration, analysing the integrated data, and for providing the reporting is herein referred to as "data warehouse application".

There is a need to test data warehouse applications due to continuously upcoming new requirements that lead to changes of an existing implementation and the implementation of new features for applications in such data warehouse systems. Erroneous behavior due to a change or new feature may generally not be ruled out, so that the change or new feature may lead to errors and/or data inconsistency in the data warehouse. Furthermore there are, for certain industries, such as the banking sector or the pharmaceutical sector, mandatory regulations (for the banking sector, e.g., Basel II and SOX; for the pharmaceutical sector, e.g. the U.S. Food and Drug Administration, FDA) that pose additional requirements on the quality of the data warehouse implementation.

Krawatzeck and Gluchowski: *"BI Testing: Status Quo und Herausforderungen",* European TDWI (The Data Warehousing Institute) Conferences, 2013, describe the examples of the state of the art and several challenges in the area of data warehouse testing.

One aspect of the testing is the provision and/or creation of test data serving as input to the data warehouse, specifically the data warehouse application.

A first ad hoc attempt to provide test data is to use production data for testing. This approach suffers from several problems and even risks:

- data privacy is hard to maintain, since many persons involved in the development of the data warehouse need to access and possibly read said data to carry out the testing;
- the production data of a new version of the data warehouse application may not be available in time for the testing, thus testing may have to be done under time pressure or possibly with outdated test data input;
- production data may be large such that test runs may take long, sometimes in the order of days;
- due to the significant size of test data, testing may require systems similar to the production environment, thus incurring high cost;
- from a testing perspective, production data are generally critical since the testing based on such data explores only existing cases but not cases which are specifically designed according to a test methodology; examples are the testing of limit values, since a data set which specifies the limit value may not occur in the production data;
- testing with production data has to be performed manually most of the time since the correctness of the result may only be judged by a person with domain knowledge; it is generally known that over the time of the performing the repeated manual testing diligence and accuracy of the testing decreases and the likelihood of error increases, thus reducing the quality and reliability of the entire testing.

There are tools for anonymizing production data. However, such tools may only resolve data privacy concerns, not the other aforementioned problems.

There are tools that reduce the volume of production data for the purpose of testing. Such tools may however only solve the size concern and may still lead to relatively high data volumes of e.g. 35% of the original size of the production data.

Synthetic test data are complex to create since, in a real data warehouse system, there are in the order of hundreds of tables and several thousands of columns, the values of which may be logically dependent through database commands. Thus, if input data for such tables is generated randomly, the logic corresponding to the source code of the data warehouse applications will encounter, during program execution, contradictions and erroneous program states, such that input data may not be transported, by means of executing the program code, to destination tables, thus rendering such input data useless for testing purposes.

There are rule-based test data generators designed to generate synthetic test data automatically. Before generation however, the testing person has to first analyze the logical dependencies and formulate rules for the test data generation. The analysis and the creation of these rules is very complex and laborious. The rules have to be continuously adopted to changes in the data warehouse implementation which requires further effort. Finally, the rule basis may become large and difficult to maintain.

Tahbildar and Kality "Automated Test Data Generation Based On Individual Constraints and Boundary Value", IJCSI International Journal of Computer Science Issues, 7(5), September 2010 propose a test data generation method to improve test coverage and to avoid a problem of unsolvable constraints. The method is based on individual constraints and a path table holding information about the paths traversed by various input test data. For generating test data, multiple paths are combined by creating equivalence classes of paths from the path table.

Although testing of data warehouses is required, in summary, since the automated generation of synthetic test data remains difficult, data warehouses are commonly tested with production data which have only low test coverage, wherein the testing occurs late and is still complex due to the large volume of test data, which necessitates a testing environment that is similar to a production environment. Test coverage refers to the relation between the number of program aspects tested by a certain set of test data vs. the number of theoretically possible program aspects. A program aspect may thereby be an individual statement or a certain statement sequence (control-flow path).

There are basically two groups of methods for the automated test data generation: model-based methods and code-based methods.

In practice, the requirements for the development of data warehouses are rarely described with and based on formal models, wherein such models could be used for the generation of test data. Thus model-based methods for the generation of test data are often not considered or possible in practice and thus not subject of the present technology.

The source code of a data warehouse application is typically available. Thus the present technology is based on the principle of generating test data from source code, i.e., the present technology falls into the category of code-based methods. The term "source code", or simply "code", does herein refer to the implementation of an application or business logic on the basis of a data warehouse system. The term "source code" does not include herein low level implementation details of the internal functionality of the data warehouse system, implementation details of the underlying database management system, and/or implementation details of the underlying operating system.

The code-based generation of test data is an area of research where some of the following technical problems are encountered in practice:

In general-purpose programming languages, the source code of a program, for which test data is to be generated, may not be entirely available or may refer directly or indirectly to program libraries that may not be available for analysis. Even if the source code of referenced program libraries would be available, the volume of such library code is often too high and thus prohibitive for analysis with commercial tools.

Further problems include:

- the computational requirements of code-based test data generation can be very high;
- the treatment of loops with a variable number of iterations can be complex;
- the treatment of arrays with variable length can be complex;
- the treatment of dynamic data structures can be complex;

At least one aspect that makes code-based test data generation complex and computationally expensive is that data generation considers multiple different paths in the control flow of the (source) code to be tested and for which test (input) data should be generated. The number of paths may increase even exponentially with the length of the program. One challenge of practical test data generation is thus to control the computational effort of the data generation process, thus to reduce the number of paths that are to be considered for test data generation, without unduly reducing or compromising test coverage.

## SUMMARY OF THE INVENTION

According to one embodiment, there is provided a computer-implemented method for automatic generation of test data for testing a data warehouse system comprising the steps of: obtaining a source code of the data warehouse system to be tested, transforming the source code into an intermediate representation, wherein the intermediate representation includes an ordered set of statements, and wherein a statement from the ordered set of statements specifies one or more data sources and/or one or more data destinations, analysing the intermediate representation to obtain a flow graph and a set of constraints, wherein the flow graph includes: a statement node corresponding to each statement of the ordered set of statements, a source node corresponding to each of the one or more data sources, a destination node corresponding to each of the one or more data destinations, control-flow edges corresponding to a control-flow relation among the statements of the ordered set of statements, input edges corresponding to an input relation among data sources and a statement, and output edges corresponding to an output relation between a statement and data destinations, wherein one or more constraints are associated with each node of the flow graph, and wherein the one or more constraints specify one of: for a source node, a boolean condition that restricts the possible values obtained from the data source, or for a statement node, a boolean condition that specifies a necessary precondition under which the statement can execute, determining one or more flow paths in the flow graph, wherein a flow path corresponds to a sequence of nodes and edges in the flow graph, determining as combined constraints for each flow path the constraints associated with the nodes of the flow path combined by logical conjunction, generating test data that meet the combined constraints of at least one of the one or more flow paths, characterized in that determining one or more flow paths comprises the following steps: (1) starting with a path prefix being a node and the one or more constraints associated with the node, (2) for all nodes in the flow graph corresponding to statements that are predecessors of the node most recently added to the path prefix, determine if the one or more constraints associated with the node have a solution when being combined by logical conjunction with the combined constraints of the path prefix, (3a) if a solution exists, add the node to the path prefix to obtain a new path prefix, combine the one or more constraints of the node by logical conjunction with the combined constraints of the path prefix to obtain new combined constraints of the new path prefix and continue recursively at step (2), (3b) otherwise continue with the next node at step (2), (4) adding the sequence of nodes and edges in the path prefix as flow path to the one or more flow paths being determined if the node most recently added to the path prefix has no predecessor node.

This has the advantage and the effect in that paths for which the corresponding combined constraints are contradictory and which would thus anyway not lead to the generation of any test data, are identified early during the method and consequently ignored and not pursued further such that the method can be very efficient, since computational resources for performing the path search, determining if the constraints have a solution, and subsequent test data generation will not be used for paths that ultimately will be found to result in no data being generated. The determining of being contradictory may already occurs early when the path / path prefix is short and the size of the combined constraint is small such that also the computation, e.g. by a constraint solver, for determining if the constraints have a solution at this stage can be efficient. A path prefix is thereby a partial path that may be complemented in the stepwise process outlined above by successor nodes and their successors etc. to arrive at a (complete) path which may be used as a basis for test data generation. Further technical effects of this embodiment that are advantageous are mentioned and elaborated in the detailed description.

In one embodiment, the steps of generating test data and determining if one or more constraints have a solution are performed by a constraint solver.

This has the advantage and the effect that the constraint solver can be highly efficient, having a specialized implementation that is independent of the test data generation method and system.

In one embodiment, the path prefix at which the determining the one or more flow paths starts is a statement node that specifies a global data destination, wherein a global data destination is a data destination which is not specified as data source by any other statement.

This has the advantage and the effect that a flow path, for which test data will be generated, starts with a path prefix, and specifically with a statement that outputs destination data into a table that is not otherwise read from, hence a table that does not provide input to the data warehouse and thus is not target of the test data generation either.

In one embodiment, the adding of the sequence of nodes and edges in the path prefix as flow path to the one or more flow paths being determined is performed if the last node in the flow path specifies a global data destination, wherein a global data destination is a data destination which is not specified as data source by any other statement.

This has the advantage and the effect that a flow path, for which test data will be generated, ends with a statement that writes data into a table that is not otherwise read from. Hence the flow path created in this way ends when data is written into the data destination.

In one embodiment, the method has the additional step of providing additional constraints as input before generating test data.

This has the advantage and the effect that the volume of the test data which is generated may be reduced and further that that said additional constraints may reduce the number of paths that are regarded as feasible and thus being a starting point of the actual test data generation process. In summary, the testing may thus be more efficient due to the smaller volume of generated test data and testing can be more focussed to specific functionality of the system under test.

In one embodiment, one or more of the data sources and/or data destinations are marked as "control data", wherein data sources marked as "control-data" contain actual data that is used as input for the step of determining one or more flow paths and the step of generating test data, and wherein for data sources and destinations that are marked as "control data", no test data is generated.

This has the advantage and technical effect that the number of tables and columns to be considered by the test data generation is reduced thus leading to a more efficient test data generation and subsequently a more focussed testing.

In one embodiment, the method performs the additional steps of creating a visual representation of the control flow relation, marking paths in the visual representation that correspond to flow paths for which test data is generated,

and displaying the visual representation and the marked paths to the user.

This has the advantage and the effect that the user can be immediately aware, based on the visual representation of the flow graph, of the functionality that is covered by the generated test data.

In one embodiment, the source code is specified in one or more programming languages.

This has the advantage and the effect that the method is more versatile since it may be applied to a larger variety of implementation of data warehouse applications.

In one embodiment, the source code is specified in SQL, the statement is an SQL statement, the data source is an SQL table or a column thereof, and the data destination is an SQL table or a column thereof.

This has the advantage and the effect that, since SQL is a widely used data base programming and specification language, the method is equally widely applicable to such systems that are based on SQL.

According to another embodiment, a computer system is configured to perform the method according to one of the embodiments described previously.

According to other embodiments, a computer program and a computer program product comprising computer program code which when being executed on a computer enables said computer to carry out the method according to one of the embodiments described previously.

## DESCRIPTION OF THE DRAWINGS

Figure 1 shows a flow chart that specifies the main steps and sequence of the method for automatically generating test data for a data warehouse.

Figure 2 shows an architectural overview of a test data generation system and related system.

Figure 3 shows an architectural overview of an exemplary computer system for implementing the test data generation system.

Figure 4 shows a schematic overview of an architecture of a test data generation system and its data flow.

Figure 5 shows a data warehouse architecture with and without message logging.

Figure 6 shows a flow graph including data and control flow corresponding to a code example.

Figure 7 shows the possible building blocks of a flow graph for showing data flow and control flow.

Figure 8 shows a flow graph including data and control flow corresponding to a simple SQL statement.

Figure 9 shows a flow graph including data flow and control flow corresponding to another code example.

## DETAILED DESCRIPTION

At first, some terms used in the description will be defined in the following list of abbreviations.

| | |
|---|---|
| DBMS | Database Management System |
| DWH | Data Warehouse |
| GI | Generation Information |
| Metadata | Definition of tables and their columns in the data dictionary of the database. Herein the term also includes all source code that constitutes the program of the data warehouse application. |
| Structure-oriented test methodology | Methods for testing that determine test cases and input data on the basis of software source code (white box testing). |
| SUT | System Under Test |

One of the problems addressed by the present technology is the automatic generation of synthetic test data for testing a data warehouse application without requiring the manual specification of formal models that control the generation through rules or other programming means.

The present technology takes advantage of the fact that the logical dependencies among values of possible input data are included in the metadata. The term "metadata" is to be understood herein to include the source code of the data warehouse application. The source code can be SQL code or code written in some of the programming languages which are usable to describe and implement data flows within a data warehouse, such as programming languages for describing the Extract-Transform-Load (ETL) process or other database programming languages. Hence in one aspect of the present technology, logical dependencies are automatically obtained from the metadata for the purpose of generating test data.

In the following, embodiments of the present technology will be described.

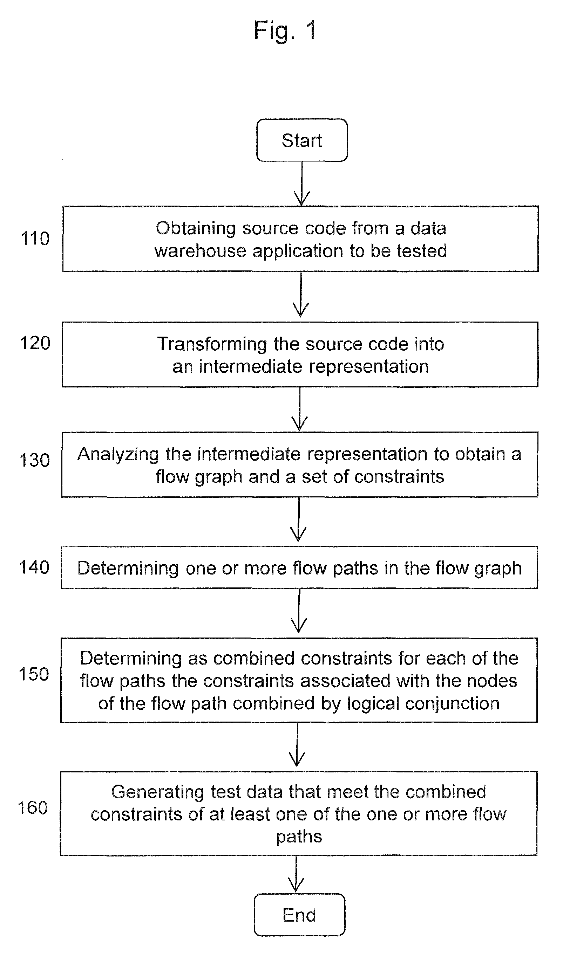

Figure 1 shows a flow chart that outlines the main steps and their sequence in one embodiment of the automatic test data generation method: In the first step 110, source code is obtained from a data warehouse application to be tested. Then, in the next step 120, source code is transformed into an intermediate representation. Then, in the next step 130, the intermediate representation is analyzed to obtain a flow graph and a set of constraints. Then, in the next step 140, one or more flow paths are determined in the flow graph. Then, in the next step 150, a combined constraint for each of the flow paths is determined by combining with logical conjunction the constraints associated with the nodes of the respective flow path. Then, in the next step 160, test data is generated that meet the combined constraints of at least one of the one or more flow paths.

In the following, the method, its technical effects and advantages are described in further details. The details of the method are exemplified on SQL and specific SQL language features. The present technology is however not limited to this choice of programming language, such that other programming languages and database query languages are equally amenable to the principles of the method for test data generation and its analysis and data generation steps described herein.

In more detail, test data generation according to the present technology proceeds in the following steps:

1. Parsing the metadata: Statements are converted into an internal intermediate format, also referred to as intermediate representation, which is suitable for further analysis and processing for the purpose of test data generation. Statements which do not change data, i.e. which are not relevant for test data generation, are skipped during parsing and need not be converted.

2. For every statement, its source tables ("sources" for short) are determined, i.e. tables from which input data for the statement are obtained. Furthermore, for every statement, its destination tables ("destinations" for short) are determined, i.e. tables to which data are written. A statement may have one or more sources and/or one or more destinations. The (data) flow graph is built from this information about sources and destinations of each statement and the possible sequence of the statements (control flow).

3. Furthermore, constraints are generated for each statement, which specify the logic of the data "transport" through the statement, which means the flow of the data from the sources, through the statement, to the destinations. Constraint generation considers all columns, tables, attributes, equations, and boolean conditions that occur in a statement to be analyzed. The constraint generation provides all SQL operators and functions as well as for all data types corresponding mappings between the columns, tables, attributes, equations, and boolean conditions occurring in a statement to the constraint specification.

4. Depending on the structure-oriented test methodology specified by a testing person, the method determines the corresponding paths in the flow graph, wherein a path is a sequence of statements along which data is "transported" in the chain of source-to-destination of each statement and the statement sequence along the path. In this description, the terms "flow graph", "data flow graph", and "control flow graph" refer to the same structure and thus the terms are used mostly interchangeably, depending on whether the emphasis should be given to the execution sequence of statements (control flow) or data "transported" by said execution of statements (data flow graph). In any case, the graph includes directed edges corresponding to the data flow relation between data sources and statements (input relation), statements and data destinations (output relation), and a successor relation between statements (control flow relation). The combined relation of data flow and control flow is simply referred to as flow relation. Furthermore there are nodes in the graph corresponding to statements, data sources and data destinations.

5. Data is generated for each path determined in the previous step as follows: first, the constraints determined in step 3 above are combined via logical conjunction of the constraints associated with all statements along the path; these combined constraints are formatted as input to a constraint solver. Second, by means of the constraint solver, one or more test data sets are generated, wherein the number of test data sets to be generated is determined by the testing person. Third, the test data generated previously are, e.g., as "load-file" or as SQL statement that enables loading the data for the purpose of testing.

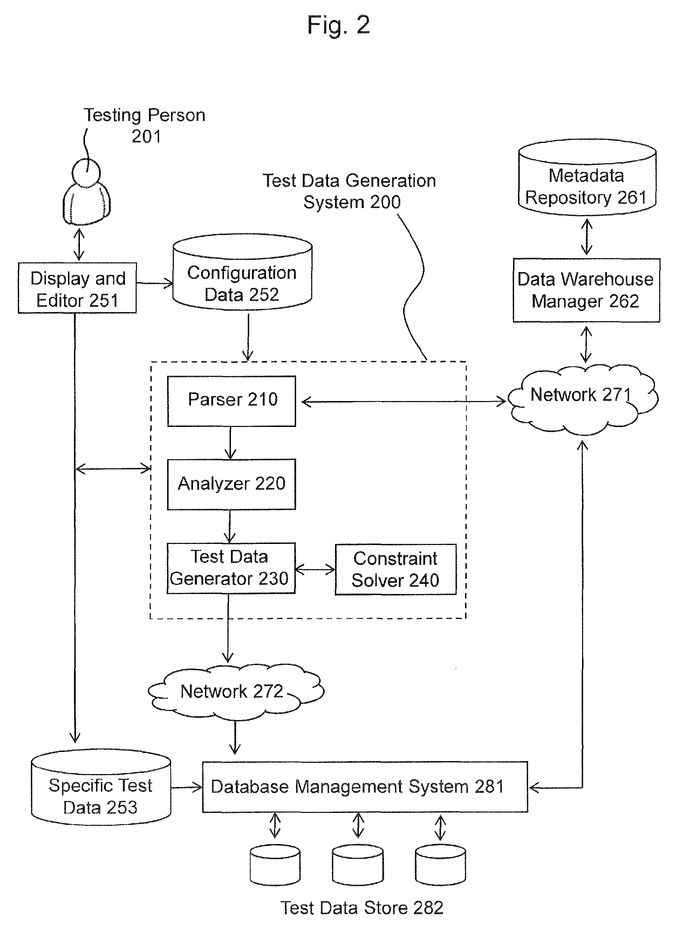

Figure 2 shows an overview of an architecture of a test data generation system, its modules, and related systems in one possible embodiment. The test data generation system 200 is comprised of a parser module 210, an analyzer module 220, a test data generator module 230, and a constraint solver module 240. The test data generation system is communicatively connected through a network 271 to a data warehouse manager 262 for retrieving information, specifically source code, from the metadata repository 261. A testing person 201 communicates with the system components via a display and editor 251, also providing configuration data 252 for the test data generation system and specific test data 253, which may be stored in the test data store 282 via a database management system 281. The test data generation system 200 is communicatively connected to the database management system through a network 272, which is the same network as network 271, to transfer generated test data to the test data store 282 via the database management system 281.

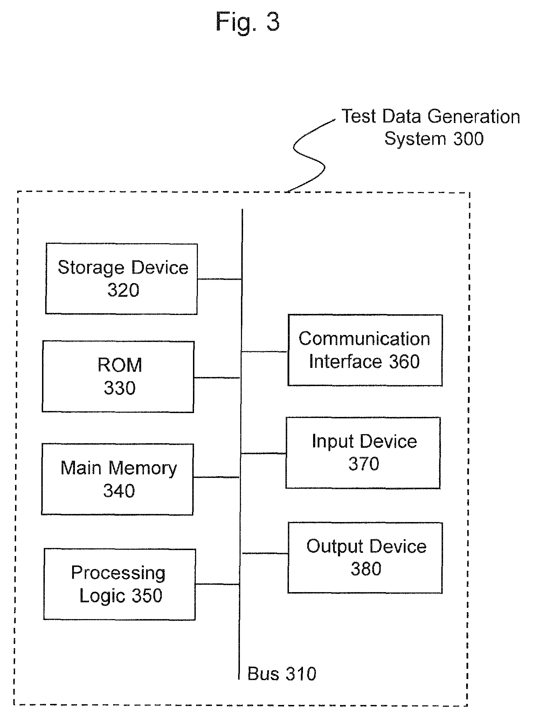

Figure 3 shows an architecture of a computer system 300 being configured to implement the functionality of the test data generation system 200 in one embodiment. The modules 210 to 240 of the test data generation system 200 outlined in Figure 2 may be implemented in one and the same or in multiple different computer systems being communicatively connected. In one embodiment, a computer-implemented test data generation system 300 comprises a storage device 320, a read-only memory (ROM) 330, a main memory 340, a processing logic 350, which may consist of one or more processors, a communication interface 360, an input device 370, and an output device 380. In one instance, all building blocks of the computer system implementing the test data generation system 300 are connected through a bus 310.

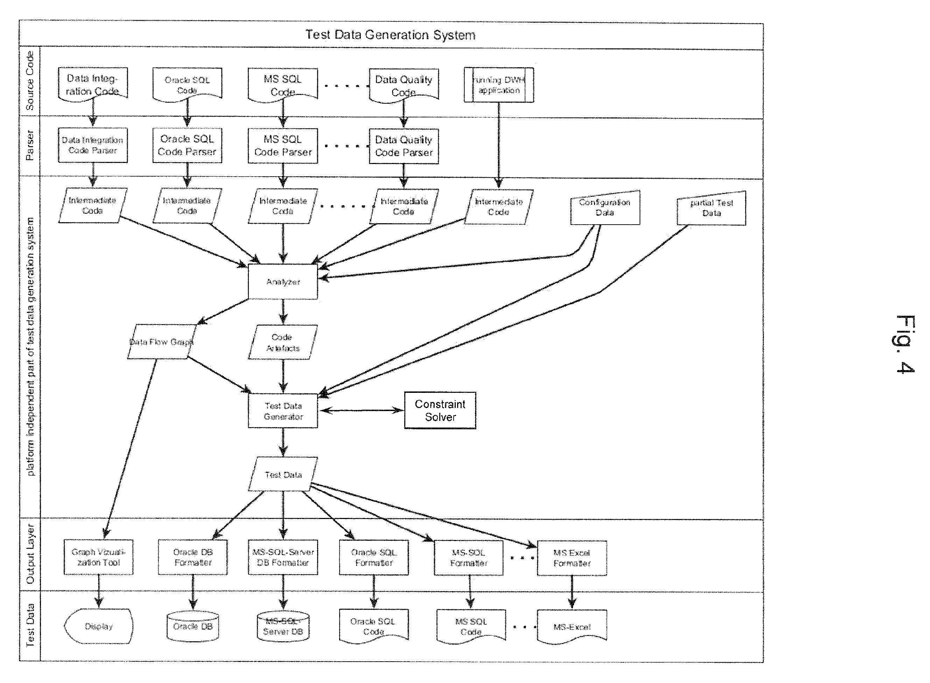

Figure 4 shows a schematic **architectural overview** of the test data generation system and process. The uppermost layer depicts multiple units of source code, possibly in different format and/or programming languages. The layout below shows different parsers, each specific to a particular type of source code, for example different programming languages such as different SQL dialects. Each parser maps the source code to intermediate code, wherein the intermediate code is common for all source code inputs. Besides the intermediate codes, there may be configuration data and specific test data directly provided by the testing person, who is commonly the person conducting the testing. All data may be stored to be available after the next system start. Such storage mechanism is not depicted in Figure 4. An analyzer process carries out the analysis of the intermediate code, wherein the analysis process is controlled by said configuration data. The results of the analysis process are the constraints and the data flow graph, both of which are used in the subsequent process to generate test data. The generated test data are outputted, depending on the configuration, in different formats on different media. Beyond these steps, the data flow graph may be output to a display. All information contained in the data flow graph may further be output in one or more text file and/or spreadsheets for further processing.

Data warehouses are commonly implemented using **different programming languages.** The present technology provides support for heterogeneous data warehouses, wherein heterogeneity refers to the use of different programming languages for the implementation of data warehouse applications. The support of heterogeneity is achieved by the present technology by employing different parsers translating different languages to intermediate code in a common format. Figure 4 illustrates this aspect wherein only some examples of programming languages are given, which are not meant to be limiting.

Furthermore the present technology provides the **testing person with the capability to specify source code files** of the data warehouse and the order in which these files should be processed explicitly. Database schema and stored procedures may thereby be directly obtained from the data warehouse.

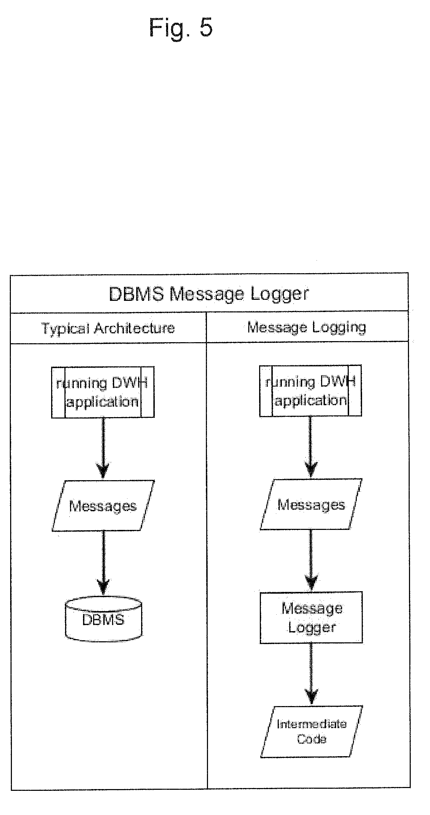

There are data warehouses, which are implemented or controlled through programs written in a **general-purpose programming language**. Test data generation is generally very difficult for such programs written in a general-purpose programming language and in particular the present technology is not designed to handle all general-purpose programming languages directly. Such programs do typically use a programming interface for accessing and communicating with the actual data warehouse. In this case, test data generation is not based, and need not be based, on available source code but can, according to the present technology, be performed in the following way: Figure 5 shows on the left-hand side a data warehouse architecture which exchanges messages directly with the database management system (DBMS). The right-hand side of Figure 5 shows that the DBMS is replaced by a message logger, which receives the same messages as the DBMS. However the message logger does not handle messages like a database does but instead transforms the messages to intermediate code, which in turn can be processed by the test data generation process. Using this principle and the architecture shown in Figure 5, the present technology is able to generate test data even for data warehouses, which are implemented or controlled through programs written in a general-purpose programming language.

In another aspect of the present technology, not every **statement in the source code is relevant for test data generation.** In some SQL dialect for example, BEGIN WORK and symmetrically COMMIT statements are used to control semaphores. Such statements perform concurrency control and do not affect the actual data stored in the tables relevant for the test data generation. Thus, such statements can be ignored by the test data generation. The same applies to various other SQL statements.

Conversely, certain SQL statements are highly relevant for the creation of test data. For example the statement CREATE TABLE is relevant, since columns are created and their properties are described. Similarly the statements SELECT, INSERT, and UPDATE are highly relevant, since they specify the data flow in the above sense. Overall, the distinction and selection of relevant vs. irrelevant statements is performed by the parser.

The **intermediate code** is an unambiguous representation for those parts of the source codes, which are relevant for the test data generation. In the following, Example 1 shows a **textual representation** of a file containing an intermediate representation:

```
ast(file,0,['C:\\dwh\\schemas\\source_code1.sql']).
ast(create_table,69,['dwhadm','tbl1',tbl_def([col_def('city',[str,40,0],
[],[]),col_def('zip_code',[int],[],[]),col_def('ort_ortho',[str,40,0],[] ,[])]),opt([in('dwh')])]).
ast(file,0,['C:\\dwh \\ source_code2.sql']).
ast(create_database,1,[dbn('db2'),'dbs']).
ast(file,0,['°C:\\dwh\\ source_code3.sql']).
ast(insert,68,[into_variant1(don('','',0,'','tbl2',''),[],ast(select,69,
[[projection([select_list([[[*]],as([])])]),from([union_references_only( [don('tb11','',0,'',zip_code','')])]),group_by([]),ord
er_by([]),[into(' ',[])]]))]).
```

Example 1: Textual representation of an intermediate representation

The following conventions are used for this textual representation of the intermediate code:

- The intermediate code is represented using terms named "ast", which has three parameters.

- The first parameter represents the name of the SQL statement. "file" is thereby a specific identifier. For each source file term using the identifier "file" appears first. The third parameter contains a list with the full name of the source file. Such names can be very long and would thus inflate the intermediate code. In the course of the analysis of the intermediate code, each statement is associated with the name of the file, from which the statement originates.

- The second parameter is the number of the code line where the source code corresponding to the statement starts. Together with the filename this information about the code position uniquely identifies the statement.

- The third parameter is a list containing all further relevant information from the code corresponding to the statement. For a CREATE TABLE statement, for example, the list contains the definitions of all columns and the options used to create the tables. The list further includes, given a recursive statement, its nested statements. These have the same data structure as the statements on the highest level.

These conventions describe an exemplary intermediate code format which is not meant to be limiting. The intermediate code may be stored in files or may be transmitted directly in the form of one or more inter-process communication messages to the test data generator.

For every supported programming language or programming language dialect, there is a separate parser which translates the source code to the intermediate code in the previously described format.

If a **new programming language** is to be considered by the test data generator for test data generation, a new parser has to be built first, in order to convert programs written in said new programming language into the common intermediate representation. If all constructs of the new programming language can be mapped by said parser to the existing constructs of the intermediate representation, no further changes to the system are necessary. Otherwise, other parts of the system may have to be adapted.

The **analysis step** serves to analyze intermediate code. The result of the analysis step is the data flow and the generation information (GI). For every statement, the following generation information is stored:

- the unique position of the statement, serving as a key to associate all generation information with the statement and further serving to associate the statement with path positions
- the type of generation information
- the actual information to be stored
- other information, depending on the type

There are the following types of generation information (GI):

- "tables in use": flags every table, which is used in a statement. During test data generation all tables are determined, which are used on the current path considered by the generation step. For all tables, which are flagged in this manner, constraints corresponding to the types of variables of all columns of all these tables are generated. "Constraints corresponding to the type" means e.g. for the type UINT that the variable is an integer larger than zero; such constraint is provided to the constraint solver.
- "calculation": constraints corresponding to computations occurring in assignments, as well as conditions specified by a statement are of type "calculation'". During test data generation all generation information of this type are determined for statements, which are on the current path considered by the generation step. These generation information are provided to the constraint solver.
- Auxiliary variables: It is sometimes necessary to split calculation into smaller terms that perform only a part of the calculation. To perform this splitting, auxiliary variables are required. In principle such variables contain the same information as generation information associated with tables and their columns. Such generation information for auxiliary variables is collected along the processing of the current path considered by the generation step and are provided to the constraint solver.
- Attributes "unique" and "serial": these attributes have to be treated especially as will become apparent and discussed later.

The **creation of the data flow graph** is described in the following. First, data flow paths are identified in the code; subsequently test data is generated for each such path. It is theoretically possible, to create constraints for the entire code of a data warehouse and to determine solutions for these constraints. However, using the present technology, such procedure will not be operational in practice since for practical data warehouse implementations thousands of equations would have to be processed at once. Such effort is practically infeasible. Thus the present technology focuses on data paths to partition the overall task of test data generation into smaller tasks that can be solved individually.

For all relevant statements, it is determined from which tables data is read; these tables are named data sources. It is further determined to which tables data is written; these tables are named data destinations. If such is performed for all relevant statements and their respective data sources and destinations, the data flow is obtained as explained on the following Example 2:

```
CREATE TABLE tablel1 (
     pointer UNIQUE NOT NULL,
     my_int INTEGER UNIQUE
) LOCK MODE PAGE;
CREATE TABLE table2 (
     pointer UNIQUE NOT NULL,
     my_int INTEGER UNIQUE
) LOCK MODE PAGE;
CREATE TABLE table3 (
     pointer UNIQUE NOT NULL,
     my_int INTEGER UNIQUE
) LOCK MODE PAGE;

INSERT INTO table2 /* stmt 1 */
     SELECT pointer, my_int
          FROM table1
WHERE my_int <= 12345;
INSERT INTO table3 /* stmt 2 */
     SELECT pointer, my_int
          FROM table2
WHERE my_int < 0;
INSERT INTO table2 /* stmt 3 */
     SELECT pointer, my_int
          FROM table1
WHERE my_int > 12345;
```

(continued)

```
INSERT INTO table3 /* stmt 4 */
     SELECT pointer, my_int
          FROM table2
WHERE my_int >= 0 AND my_int <= 12345;
INSERT INTO table3 /* stmt 5 */
     SELECT pointer, my_int
          FROM table2
WHERE my_int > 12345;
```

Example 2: Source code of a first SQL example program involving three tables

In Example 2, data records are copied from table *table1* to table *table2* using the statement *stmt1* and *stmt3*. The copying includes records where *my_int <= 12345* (*stmt1*) and where *my_int > 12345* (*stmt3*). *stmt2, stmt4,* and *stmt5* copy records from *table2* to *table3*. The copying includes records where *my_int < 0* (*stmt2*), where *my_int >= 0* and my_int <=12345 (*stmt4*), and where *my_int > 12345* (*stmt5*).

When parsing the above SQL code, the method of the present technology analyzes the SQL code and provides as a result the records shown in Example 3:

```
Node (stmt1,[table1],table2)
Node (stmt2,[table2],table3)
Node (stmt3,[table1],table2)
Node (stmt4,[table2],table3)
Node (stmt5,[table2],table3)
Constraint (table1,[table1.pointer <> NULL, unique(table1.pointer)])
Constraint (table1,[unique(table1.my_int)])
Constraint (table2,[table2.pointer <> NULL, unique(table2.pointer)])
Constraint(table2,[unique(table2.my_int)])
Constraint(table3,[table3.pointer <> NULL, unique(table3.pointer)])
Constraint(table3,[unique(table3.my_int)])
Constraint(stmt1,[table1.pointer <-> table2.pointer])
Constraint(stmt1,[table1.my_int <-> table2.my_int, table1.my_int <= 12345])
Constraint(stmt2,[table2.pointer <-> table3.pointer])
Constraint(stmt2,[table2.my_int <-> table3.my_int, table1.my_int < 0])
Constraint(stmt3,[table1.pointer <-> table2.pointer])
Constraint(stmt3,[table1.my_int <-> table2.my_int, table1.my_int > 12345])
Constraint(stmt4,[table2.pointer <-> table3.pointer])
Constraint(stmt4,[table2.my_int <-> table3.my_int, table1.my_int > 0, table1.my_int <= 12345])
Constraint(stmt5,[table2.pointer <-> table3.pointer])
Constraint(stmt5, [table2.my_int <-> table3.my_int, table1.my_int > 12345])
```

Example 3: Textual representation of records resulting from the analysis of the SQL code of Example 2.

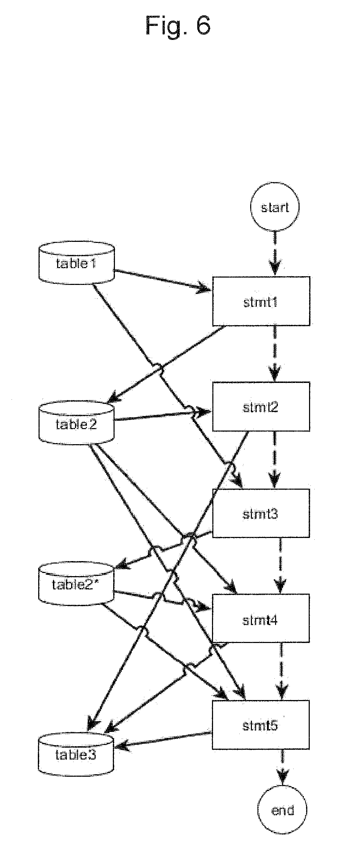

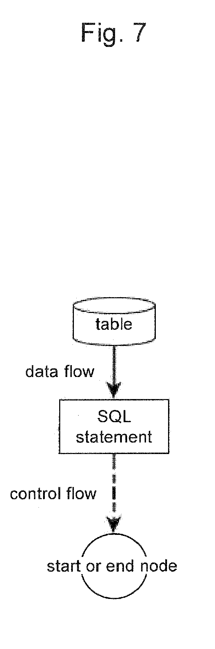

According to the above described method, the graph shown in Figure 6 is generated from the records named *Node*. The meaning of symbols, nodes, and edges used in the graph of Figure 6 is explained in Figure 7.

Note that *table2* occurs twice, wherein the second occurrence is distinguished and marked with a "*". This signifies that *table2,* when being the destination of *stmt1* is different from *table2*,* which is destination of *stmt3.* This differentiation is significant when determining the path.

The concept of **global source tables** is explained in the following. Global source tables are those tables which deliver data from outside into the data warehouse. Global source tables are determined by traversing the data flow graph. Global source tables are those tables which only serve as source tables and which are not referenced by any statement as destination table. In the above example, *table1* is a global source table.

The concept of **global destination tables** is explained in the following. Global destination tables serve as data sink of the data warehouse. Global destination tables are those tables, which solely serve as destination tables and which are not referenced by any statement as source table. In the above example, table3 is a global destination table.

In the following, the creation of **internal data structures for tables and columns** is discussed. Unlike in general-purpose programming languages, the most important data structures in SQL are tables and their columns, not simple scalar variables.

The **lifetime and validity** of a table extends from its creation either beyond the time of execution of the data warehouse application or until it is erased by a TRUNCATE or PURGE statement. The lifetime and validity of a table have to be tracked by the analysis since after erasing a table, a new table using the same name may be created and the analysis and the test data generation method have to distinguish between said new table and said erased table, despite that both tables have the same identifier.

During the operation of the data warehouse, i.e. during execution of the data warehouse source code, changes concern not only the content of user defined data structures (e.g. tables) but also properties of data structures (e.g. metadata like name, type etc. of a table and its columns). The analysis and the test data generation method have to keep track also of such changes of properties and attributes of data structures and tables.

In addition to the validity of entire tables, the validity of columns in those tables has to be tracked as well since columns of tables may be erased, renamed, or other properties and attributes of said columns may be changed during the operation of the data warehouse, i.e. during execution of the data warehouse source code.

Since tables and their columns may be renamed, tracking in the aforementioned sense includes tracking the identifier associated with said table or column.

Some examples of source code positions where the validity of a table and respectively its identifier start:

- a CREATE TABLE or CREATE VIEW statement;
- a new table identifier is valid after a statement for renaming the table;
- statements that change properties other than the name of the table that may affect how test data generation handles the table.

Some examples of source code positions where the validity of a column and respectively its identifier start:

- the same examples that start the validity of a table or table identifier to which the column belongs;
- a new column identifier is valid after a statement for renaming the column;
- statements that change properties and attributes other than the name of the column that may affect how test data generation handles the column

Some examples of source code positions where the validity of a table and respectively its identifier end:

- the last statement of the source code since the table has not been erased, renamed, or table properties and attributes have been changed by statement preceding the last statement affecting how the test data generation handles the table;
- a statement that changes the name of the table;
- statements that erase the table;
- statements that change table properties and attributes other than the name of the table that may affect how test data generation handles the table.

Some examples of source code positions where the validity of a column and respectively its identifier end:

- the same examples that end the validity of a table or table identifier to which the column belongs;
- a statement that changes the name of the column;
- a statement that erases the column;
- statements that change the column properties other than the name of the column that may affect how test data generation handles the column.

The validity of tables, columns, and their identifier respectively are stored together with information about the tables or columns. At every access to a table and the columns contained therein, it has to be checked, if the incarnation, i.e. the identifier used for the access, is already valid. For all objects (tables, columns, views, variables, etc.), identifiers, which are internal to the analysis and test data generation method are created, wherein these internal identifiers are unique. Such internal identifiers resolve the problem of ambiguous identifiers for further subsequent steps of the analysis and method of test data generation. It is only at the time of emitting actual test data that internal identifiers are mapped back to the actual identifiers that occur in the program code.

In SQL, there are so-called aliases for tables, views, columns etc. Such aliases are used temporarily to prevent repeated reference to long names given to those objects. The validity of such aliases extends to the statement, in which such aliases are included, or parts therein. At the time of the analysis, all aliases are replaced by their corresponding unique internal identifiers as described above, such that during the analysis and test data generation method no further mapping or special treatment of such aliases is required.

In the following, the **test data generation process** is described. The process of test data generation is governed by two main criteria: the first criterion is based on the selection of a **coverage metric;** the second criterion differentiates between the **generation of test data for smoke testing** or **hybrid test data generation.** In the following description first different coverage metrics are discussed, then smoke testing and hybrid test data generation are distinguished.

There are several methods for structured testing that differ in the selection of the coverage metric. The coverage metric "testing all statements" is one example metric which is particularly relevant for the generation of smoke tests, since other methods of structured testing may result in too high data volumes. Alternatively, if test data generation is performed for small data warehouses, the coverage metric "testing all paths", meaning all control flow and/or data flow paths respectively, is available; yet alternatively, the effects of the combinatorial explosion may be mitigated by applying automated test data generation as described herein only to parts of the data warehouse code.

For hybrid test data, there are two strategies: First traversing all paths that can be found between source and destination tables and using the first path for which test data generation is possible, wherein the criterion whether data generation is possible will be explained and apparent later in the description. Second, and alternatively, the testing person may specify the path for which to generate test data.

In the following, determining paths for the coverage metric **"testing all paths"** is described. Said coverage metric determines all paths in the flow graph along which data flow from global source tables to global destination tables along and transferred by statements contained in the SQL code. In the previous example, these are the paths along the statements that transport data from table *table1* to table *table3.* An appropriate traversal algorithm determines and calculates the paths shown in Example 4:

Path([stmt1, stmt2])
Path([stmt1, stmt4])
Path([stmt1, stmt5])
Path([stmt3, stmt4])
Path([stmt3, stmt5])

Example 4: Paths in the SQL code of Example 2 resulting from the "testing all paths" coverage metric

The notation *Path ($[x_0, x_1, ..., x_n]$),* specifies a path of length $n+1$ including the nodes $x_0, ..., x_n$, where square brackets *[...]* denote a list.

Note that *Path([stmt3, stmt2])* is not included, since data cannot flow "backward".

Determining paths for the coverage metric "testing all paths" is carried out in several steps as follows:

• Each node corresponding to a global destination table is used as a starting node in the following steps.
• Determine all paths in the flow graph from the starting node using depth first search in the reverse direction of the flow to nodes corresponding to global source tables.
• For each table, for which its corresponding node is encountered on a path, determine those statement nodes for which said table serves as a destination table and which are predecessors of the statement node in the control flow, from which the traversal started. These statement nodes are then subject to further processing, whereby, for each such predecessor statement node, the procedure continues recursively with all source tables of said predecessor statement node. The (recursive) procedure ends at nodes which correspond to global source tables or statements that create those tables.

• The (recursive) search in path prefixes is aborted, if no test data can be generated or the conjunction of constraints associated with the statement nodes along the path are contradictory, as described elsewhere in this description.
• For every path that is found, test data is generated.
• Subsequently, i.e. after to test data has been successfully generated for a path, alternative paths in the flow graph according to the depth first search are searched/traversed via backtracking until there is no more path.

In the following, determining paths for the coverage metric **"testing, all statements"** is described. Said coverage metric determines the number of paths that contain all statements. Thereby, the number of paths should be small. In the example, as few paths as possible should cover/include all statements, i.e. *stmt1* to *stmt5.* An appropriate traversal algorithm determines and calculates the paths shown in Example 5:

```
Path([stmt1, stmt2])
Path([stmt1, stmt4])
Path([stmt2, stmt5])
```

Example 5: Paths in the SQL code of Example 2 resulting from the "testing all statements" coverage metric

Determining paths for the coverage metric "testing all statements" is carried out in several steps as follows, whereby each statement node has an associated mark that indicates whether the node has been visited by the procedure so far. Initially, none of the statement nodes is marked:

- Initially, select an arbitrary statement node as a starting point of the traversal
- Different from the path determining for the coverage metric "testing all paths", paths have to be traversed in both directions, i.e. in the direction of the flow graph and the reverse direction, until a path is found for which test data generation is successful.
- When searching paths in the direction toward the source tables: For each table, for which its corresponding node is encountered on a path, determine those statement nodes, for which it serves as destination table and which are predecessors of the statement node in the control flow, from which the traversal started. These statement nodes are then subject to further processing, whereby, for each such predecessor statement node, the procedure continues recursively with all source tables of said predecessor statement node. The (recursive) procedure ends at nodes which correspond to global source tables or statements that create those tables.
- When searching paths in the direction toward the destination tables: Starting from the statement node that initially served as a starting point of the traversal, take all destination tables and determine for each such destination table nodes, for which this table serves as source table and which are successors in the control flow of the node from which the traversal started. These statement nodes are then subject to further processing and recursion corresponding to the above.
- If necessary, i.e., if not all statements have been visited by the search/traversal so far and no test data could be generated so far, alternative paths in the flow graph are searched/traversed via backtracking until a path is determined for which test data generation is successful.
- All statements that are included on a path are marked as "visited".
- The procedure is repeated starting at statements that are not marked as "visited", until all statements are marked as "visited".

When comparing the coverage metrics "**testing all paths**" vs. "**testing all statements**" in practice, the differences in the number of generated paths is much more pronounced than what one may expect from the simple example. For instance, the maximum number of paths required to cover 1000 statements is 1000, whereas according to the criterion **"testing all paths",** many more paths are required, namely in the order of millions or higher.

In the following, the specification of **exclusion and/or addition of global source and/or destination tables** is discussed. In the previous paragraphs, the method for automatically determining global destination tables and source tables has been described and used. In certain cases, such automated determination has to be changed and adopted by the testing person by excluding or adding further tables as explained in the following.

The addition of further global destination tables may, e.g., be advisable or necessary in the following cases: There may be tables that are not automatically recognized as global destination table since said tables, while being used in some statements as source table, are from the perspective of a data warehouse developer or tester to be regarded as global destination tables. An example are tables which are primarily used to store reporting information which are however also used as data source by some statements. Without explicitly specifying such tables as global destination tables, no or only few test data would be generated. Hence the method provides the possibility that a testing person specifies further tables as global destination tables in addition to those tables being recognized automatically as global destination tables.

The exclusion of certain tables as source table may, e.g., be advisable or necessary in the following case: there may be tables that are recognized as source tables during the automatic determining of global source tables, for which it is however not desirable to be considered as such. For example system tables, which should not be written to, considering that writing may occur during the test data generation step. Hence the method provides the possibility that a testing person specifies certain tables, which are automatically determined as source tables, to be excluded, i.e., ignored during test data generation.

Another example is the "console", which is typically recognized as global destination table. By default, no test data are generated for the corresponding table, except if the "console" is explicitly added as global destination table for which test data generation should be performed.

During the test data generation step, in particular during the process of determining paths according to a coverage metric, paths from the flow graph need to be determined. The step of determining paths is also referred to as "**path search**" herein, which can be regarded as the procedure for the systematic enumeration of feasible paths. In the following, an **optimized procedure for path search** is described.

The generation of test data is performed, as described above, along data flow paths. On the one hand, the number of **combinatorial paths** is very high and typically grows dramatically, due to combinatory explosion, with increasing length, i.e. the number of statements in the input program. On the other hand, many of the combinatorial **paths are not feasible during any program execution,** i.e. if there exist no values of input data that achieve data flow through all statements along that path. Briefly stated, test data generation for infeasible paths will always result in no data. Thus, for the purpose of test data generation, the path search may be optimized in a manner to avoid the handling and computations related to paths that are not feasible. An efficient method for path search is presented in the following, which aims at reducing the number of paths being processed during path search and downstream steps of the constraint solving and test data generation:

When traversing paths for the purpose of the path search, the method determines for every prefix of a path, if there exist input data which would allow execution of all statements along said path prefix. The existence of such input data may be approximated in the present method by attempting the generation of test data for said path prefix; alternatively to attempting test data generation, it is possible to let a constraint solver determine if the conjunction of constraints associated with the statements on the path prefix has a solution (or else is contradictory). If test data generation is not possible (conjunction of constraints is contradictory), then the path prefix and its possible continuations along sub-paths starting at statements following the last statement of the path prefix, are not considered by the path search any longer and are not subject to subsequent analysis and data generation steps either. Thereby "test data generation is not possible" may mean that the combination of constraints associated with the statements of the path prefix has no solution, wherein combination means logical conjunction. The existence of a solution for a logical conjunctive combination of constraints may thereby be determined by a constraint solver.

This optimization is illustrated on the previous example. Consider the paths specified in Example 4 resulting from the "testing all paths" coverage metric. The first three paths start with *stmt1.* The optimized method attempts at first to generate test data for the path prefix consisting solely of the statement *stmt1.* Only if this step succeeds, the optimized method considers the paths *Path([stmt1, stmt2]), Path([stmt1, stmt4]),* and *Path([stmt1, stmt5]).* If no data can be generated for the path prefix *stmt1,* all paths *Path([stmt1, ...])* starting at *stmt1* are not further considered by the path search and the method would proceed the path search with paths starting at *stmt2.*

It should be noted that data generated during the above procedure, i.e. when attempting test data generation, are not considered as valid test data and are not used further during the procedure. The data generation at this stage of the procedure merely serves for determining whether a path prefix is feasible or not.

A possibility of improving the path search by limiting the enumeration of combinatorial paths is discussed in the following: There are several reasons that let data generation fail for a certain path prefix, for example:

- Contradictory constraints, caused by contradictions in statements. In the above example, this applies to *Path([stmt1, stmt5])* and *Path([stmt3, stmt4]).* Path prefixes with contradictory constraints are not considered further, i.e. no continuations of such paths are considered during the further path search.

- High computational effort: the constraint solver may spend significant computational effort (computation times larger than one day) to solve complex constraints or determine that the constraint has no solutions, i.e. is contradictory. Thus, in cases where constraint solving exceeds a certain time limit, the generation of test data for the path corresponding to the constraint is aborted and the path is regarded as infeasible.

The **computation of test data for a given path** is described in the following. First and according to the above, it should be apparent that test data generation is only performed for paths that are determined as feasible paths by the previous step. For every path determined by the previous step the constraints associated with the statement and tables constituting the path are determined and provided to the constraint solver. The following Example 6 shows the constraints determined for *Path([stmt1, stmt2])* of the SQL code of Example 2.

```
/* Constraints for Path([stmt1, stmt2]) */
tablel.pointer <> NULL,
```

(continued)

```
unique(table1.pointer),
unique(table1.my_int),
table2.pointer <> NULL,
unique(table2.pointer),
unique(table2.my_int),
table3.pointer <> NULL,
unique(table3.pointer),
unique(table3.my_int),
table1.pointer <-> table2.pointer,
table1.my_int <-> table2.my_int,
table1.my_int <= 12345,
table2.pointer <-> table3.pointer,
table2.my_int <-> table3.my_int,
table1.my_int < 0.
```

Example 6: Constraints of *Path([stmt1, stmt2])* of the SQL code of Example 2

The constraint solver computes for the columns of the source table values which fulfill these constraints, e.g., *table1.pointer = 1* and *table1.my_int = -1*. These values reflect also the test data to be generated. Since these data fulfill all constraints determined previously, they can be loaded into the data warehouse by means of SQL scripts.

There are paths for which no values (i.e. constraint solution) can be found. In the previous example, these are *Path([stmt1, stmt5])* and *Path([stmt3, stmt4]).* Such paths would, according to the above, have been excluded earlier and would not even be considered anymore at this step of the overall method of automatic test data generation.

In the following, the handling of **data types** is described. In general, the present method may support all data types which are commonly used for calculation or filtering in a data warehouse. Examples are the ANSI-SQL types CHARACTER, CHAR, NCHAR, VARCHAR, NUMBER, DECIMAL, INTEGER, INT, SMALLINT, FLOAT, DOUBLE PRECISION and REAL.

In the following, the aspect of **assignment** is described. If test data is generated for a path, it has to be determined, how the columns of tables are involved in the data flow corresponding to the path. Assignment is the simple case to describe such data flow. Consider the SQL program in Example 7:

```
CREATE TABLE table1 (
    pointer UNIQUE NOT NULL,
    my_int INTEGER UNIQUE
) LOCK MODE PAGE;
CREATE TABLE table2 (
    pointer UNIQUE NOT NULL,
    my_int INTEGER UNIQUE
) LOCK MODE PAGE;
INSERT INTO table2
    SELECT pointer, my_int
        FROM table1;
```

Example 7: Source code of a second SQL example program

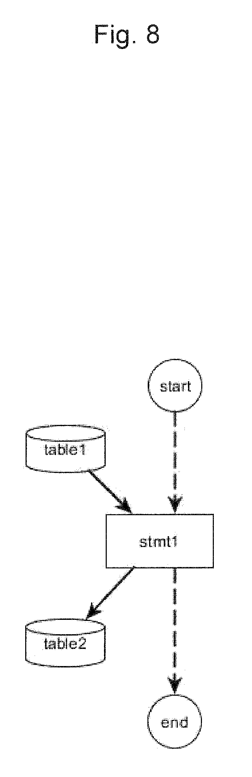

In this example, data "flows" from *table* table1 to table *table2.* Figure 8 illustrates this example further on a simple flow graph. If all involved tables have the columns *pointer* and *my_int* and the definition of those columns are compatible or correspond, the data flow between the tables can be described by assignments as:

$$table2.pointer = table1.pointer$$

and

$$table2.my\_int = table1.my\_int.$$

There are no further restrictions. When using the constraint solver, values will be given to *table1.pointer* and *table1.my_int* that fulfill all described constraints according to the constraint solver's internal algorithm. For example, the data generated in the above example are provided in a file named *table1.unl* with the contents shown in Example 8:

```
0|-2147483647
```

Example 8: Textual representation of generated test data for table1

Since assignments that involve different tables are handled correctly, referential integrity among data generated for different tables is guaranteed.

In the following, the aspect of **calculations, in particular arithmetic expressions,** are described. Consider the following SQL statement shown in Example 9 that contains an arithmetic expression:

```
INSERT INTO table2
    SELECT pointer, my_int + 1
    FROM table1;
```

Example 9: SQL statement with a calculation/arithmetic expression

The data flow between the tables can be described by assignments as:

$$table2.pointer = table1.pointer$$

and

$$table2.my\_int = table1.my\_int + 1.$$

The constraint solver handles such assignments involving certain arithmetic expressions on the right hand side as well and returns possible values of test data in *table1* that meet these constraints.

In the following, the aspect of **boolean conditions** are described. Referring to the first example, the SQL code therein includes a WHERE clause in *stmt4* specifying a boolean condition, namely

$$table2.my\_int >= 0 \text{ AND } table2.my\_int <= 12345$$

Such boolean condition means additional constraints to the generation process which are handled correctly by the constraint solver.

In the following, the aspect and handling of **functions on data types** is described. To handle SQL code that includes a function invocation, the semantics of the invoked function may be modeled in the constraint solver and constraints corresponding to the function invocation may be generated. In general, precise solutions for the handling of function invocations do commonly involve the generation of specific constraints. An example is given in the next paragraph, discussing the representation and operations on character sequences.

In the following, the aspect and handling of **data types representing characters and character sequences,** wherein the latter are also commonly referred to as "strings", is described. Constraint solvers may not generally be capable of handling characters and/or character sequences. Thus, the present technology may use the following procedure to handle data types representing characters and character sequences.

Character sequences may be represented by arrays, the elements of which may be of an integer type. The value of each array element may correspond to the code of the character at the respective position, e.g. according to the ASCII. Constraints on the values of each element of the array determine which characters are allowed. Moreover, the length of the character sequence may be represented by an integer type constraint variable as well. The minimum value of such length variable may be zero, the maximum value may be provided by the programmer or the type definition of the character sequence type, or could be a system wide constant managed by the test data generator. In such scheme, the empty string has length zero. Furthermore, operations on character sequences like concatenation may result in the generation of constraints relating to the length of the character sequences to be concatenated and the character sequence resulting from the concatenation operation. For example the operation

$$concat = char1 \oplus char2$$

where $\oplus$ is the symbol for the concatenation operation, may result in the constraint

$$length\_concat = length\_char1 * length\ char2$$

In the following, the aspect and handling the **SQL-attributes UNIQUE and SERIAL** are described.

When test data values are generated for columns or data types that have the attribute UNIQUE, each generated value is recorded. Given this recorded information, subsequently generated records may not repeat values that occurred already previously. In one possible implementation the generation of each test data record creates another, additional constraint which forbids all previously generated values. In another possible implementation the labeling skips values that were used previously.

Some SQL-dialects provide an attribute SERIAL. The values of columns which are declared as SERIAL do automatically obtain consecutive unique values. Optionally the starting value may be specified. The present method manages for each column, which has the SERIAL attribute, a counter. For each record generated for a table, which includes such SERIAL column, the counter will be increased by one and the field corresponding to the column of the generated record obtains the value of the counter. The initial value of such counter may be zero or, optionally and if available, the predefined initial value.

In the following, the aspect of **parallel execution of the test data generation process** is described. The steps of parsing and the computation of the constraint solver may execute in parallel to increase overall performance of the test data generation process.

In the following, the aspect of distinguishing **user data and control data** is described. In some cases, it may occur that application programmers do not only store user data in the data warehouse but also data for controlling the process of loading data. Such data for controlling the process of loading are called "control data". It may occur that test data may not be representative and effective for testing if test data generation also includes tables containing control data. Such control data are commonly small in volume and may not be subject of the test data generation. For these reasons, the present method and system for test data generation may provide an option to specify, whether a table respectively certain columns of a tables contain control data and which values are contained therein. In the present method, these control data may be provided manually, they may be provided in a file, or they may be provided directly in tables of the data warehouse under test and will in any case be used and provided as constants to the present test data generation.

In the following, the aspect of handling **statements that delete data and tables** are described. In SQL, the deletion of rows or even an entire table may be performed by the DELETE statement. If such statement appears on a path, the selection criteria of the data to be erased are to be logically inverted when determining the constraint corresponding to the statement. This has the effect that generated test data will not be erased, when the statement is reached during test execution. In other words, the inverting of the selection criteria included in the DELETE statement and tables that test data can "pass" through that statement when a path including the statement is executed during testing.

In the following, the aspect of handling **statements that rename tables, views, columns, and other objects** are described. In SQL, such renaming may be performed, e.g., by the statements RENAME or ALTER TABLE. When determining constraints corresponding to the statement and when computing test data, such statements are to be handled as follows: First the object to be renamed is to be treated like a new object. Second, the object with the original name should be assigned to the new object corresponding to the new name. Consider, e.g., the following SQL statement: *RENAME tbl2 TO tbl3*

This statement leads to the following behavior of the search and generation: Table *tbl2* is treated like a new table named *tbl3,* wherein all attributes of *tbl2* and *tbl3* are identical. All columns of table *tbl2* are assigned to the corresponding columns of *fbl3.*

In the following, the aspect of **redefining variable values** is described. In certain cases, the value which certain variables should take on at runtime is known in advance. An example would be a certain date for performing a scheduled data warehouse operation. From the perspective of testing, it is reasonable and useful, to specify this certain date as input when generating test data for testing the specific data warehouse operation. The date may be the date of the next planned run of the scheduled data warehouse operation or the date of a year-end closing run.

The name and value of such variables, which have said property, may be provided manually, they may be provided in a file, or they may be provided directly in tables of the data warehouse under test.

In the following, the aspect of **scaling the size of the test data is** described. The method described previously may generate very small test data records. In certain cases it may be necessary for testing, to have test data sets of a certain size. The present method provides the possibility to specify and use a **scaling factor** for test data generation. Given such scaling factor, the present method generates for each path not only the single record but multiple records wherein the number of generated records corresponds to the scaling factor.

In the following, the aspect of **forbidden values** related to **negative testing,** is described. The present technology also supports the generation of **invalid data.** Such invalid data are important for tests where the behavior of the system under test when processing invalid test data should be tested.

To generate test data values for negative tests, constraints associated with statements may be inverted logically. While using the unchanged test data generation method, negative test data may be obtained from such inverted constraints.

In the following, the aspect of **hybrid test data generation** is described.

The present method described so far may be used for the fully automatic generation of synthetic test data. In the method presented so far, the testing person provides the system merely with metadata, possibly determines global source tables and/or global destination tables to be ignored during the generation process, and selects the structure-oriented test methodology according to which test data should be generated.

One use of fully automatic test data generation is smoke testing. The purpose of such tests is to determine whether the data warehouse code may generally be executed without encountering major errors. Smoke testing is not intended to target and test in detail specific functionality. For example, test data that are generated for smoke testing may be employed for testing the data warehouse system after porting of the data warehouse to a new system or platform or after changing the system. The purpose of such testing is to assess the functionality of two instances of the data warehouse and to verify if both instances have the same functional behavior. The same functional behavior is required if the functionality of the data warehouse itself is not changed but some other aspect of the system changes, such as the hardware, the operating system, the version of the database management system or a change of the database management system to an alternative technology.

In hybrid tests data generation, the testing person may specify certain source data, e.g., values of certain columns of a table, thereby relying on the above described procedure to complement this data, e.g., to determine appropriate values for other columns of the table. In addition, the testing person may specify a test oracle, e.g. in the form of one or more SQL statements, that verifies, after execution of the data warehouse code to be tested, if the values of data after test execution meet the conditions expected by the test oracle such that the test may be regarded as successful. Furthermore, the testing person may additionally specify certain paths for hybrid test data generation. For the purpose of such specifying, the data flow graph is displayed to the testing person such that the testing person may select certain paths for hybrid test data generation by selecting the displayed symbols corresponding to statements on the certain paths. The term "hybrid" relates to the fact that the originally fully automated method is enhanced with aspects that enables the testing person to control and influence the test data generation manually.

Test data that are generated using hybrid test data generation as described above may be employed for testing very specific and targeted functionality of the data warehouse.

Furthermore, in hybrid test data generation, the fully automatic test data generation may be modified as follows: The person performing the testing specifies additional data and/or conditions using an appropriate editor, according to which the testing person can better control the aspects of the data warehouse application to be tested. For example the testing person may focus attention only on tables and particular columns of interest for testing said aspect. The testing person may then trigger the generation of test data according to the described method to complement test data values which have not been specified. The hybrid test data generation performs test data generation under consideration of the newly specified / additional constraints and combines the thus automatically generated test data with possibly user specified test data such that the user specified limitations and/or determinations concerning the test data are accounted for.

The motivation of hybrid test data generation is as follows: If only metadata is considered in the testing method and associated test data generation, then both, the testing and the execution of the system, would be based on the same specification basis, which is the metadata including the source code of the data warehouse application. Hybrid test data generation enables the principle of including additional "intellectual" elements and information beyond the metadata into the test data generation process. Such additional "intellectual" elements and information correspond to the additional data and/or conditions specified by the testing person.

The principle of hybrid test data generation is demonstrated on the following source code given in Example 10:

```
CREATE TABLE table1_x (
    pointer UNIQUE NOT NULL,
    my_int INTEGER UNIQUE
) LOCK MODE PAGE;


...
INSERT INTO table1 /* stmt0 */
    SELECT pointer, my_int
        FROM table1_x
        WHERE my_int = 12345 or my_int = 789;
...
```

Example 10: Extension of the source code of the first SQL program specified in Example 2

In this code, two statements have been added, namely the declaration of the copy of *table1*, called *table1_x* (*CREATE TABLE*) and the statement *stmt0* (*INSERT*) which copies rows from *table1_x* to *table1* when the row meets the condition/constraint

*my_int = 12345 or my_int = 789.*

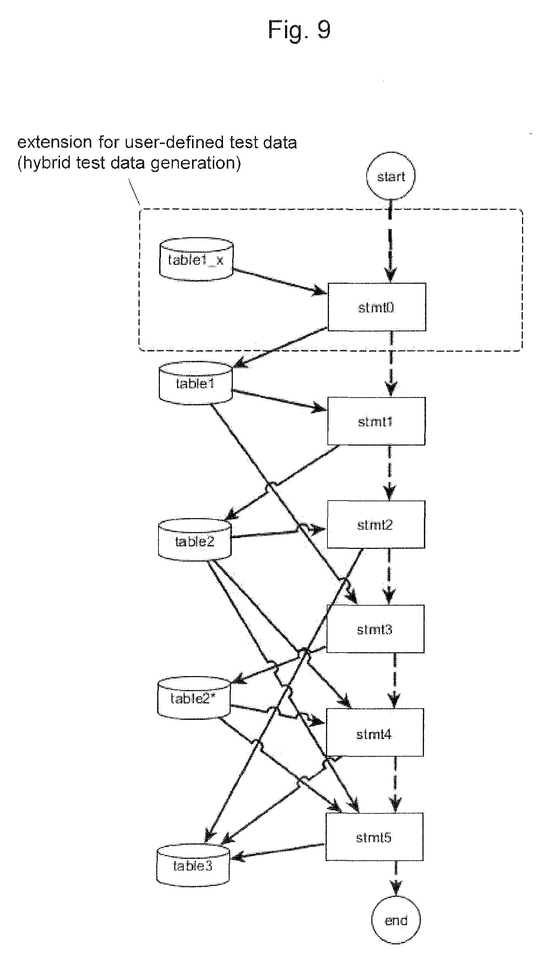

Figure 9 shows the data flow graph corresponding to the first example with the additional code specified above.

Based on the additional code given in this example, the test data generation of the additional table *table1_x* results, for example, in two records that meet the specified condition:

```
0|12345
1|789
```

Example 11: Textual representation of generated test data for *table1_x*

After test data generation, the system stores these two records in a file called *table1.unl* wherein all record respectively rows in *table1_x* meet the criteria specified by the testing person. Upon testing, said data of the resulting file *table1.unl* are loaded into the table *table1*.It is noteworthy that the testing person specifies only constraints for column *my_int,* whereas all other data have been generated automatically such that referential integrity can be mapped and maintained without the testing person taking care of it. In other cases, further data may be generated to obtain records that may be loaded into the data warehouse system. It is also possible to combine several of such test data sets, such that several tasks may be carried out in a single automated test run.

The described method may be employed in the described manner to complement and complete data sets that are manually specified and initially incomplete. After completing such manually specified test data sets, they may be loaded as test data into the data warehouse.

Furthermore, **hybrid test data generation** may be used for the **testing of partial paths.** Such kind of testing is necessary for so-called unit tests wherein not the entire data warehouse code but only specific parts of the code are tested. For unit testing, the paths used for test data generation are not necessarily paths between global source tables and global destination tables but may be paths between any source table and respectively any destination table. The testing person is given the possibility of selecting certain partial paths for which, using the above described method, test data are generated. When executing a test only statements on the selected path are executed and, if necessary, further statements for creating the tables that are used during the test.

In the following, the aspect of **providing test data output** is described. There are several different formats for outputting the generated test data:

First, test data may be provided as a set of database commands (e.g. the SQL INSERT statement) which causes data to be inserted / written directly into the test database. Second, different formats may be written into files before and in preparation of performing the testing. Some formats supported by the present method and system are:

- UNLAOD format

- source code with insert commands (see above)

- MS-Excel

- ASCII text

- CSV format

This enumeration is not meant to be exhaustive or limiting, and further formats may be supported.

In principle, a testing person may load the generated test data into test management tools or may include the generated test data as part of one or more test scripts, for which execution may be triggered manually and for which results are verified manually by the testing person after a test run.

In the following, the aspect of **test oracle** and **test automation** are discussed. For testing a data warehouse functionality, a test oracle is required besides test data, wherein the test oracle foresees the results to be expected after test data are loaded into the data warehouse.

There are several possible test oracles:

The first possible test oracle concerns testing with fully automatically generated test data whether a change of the system with unchanged data warehouse functionality does not result in failures (e.g. when porting the data warehouse system to a new platform, or when updating the data warehouse system software). Such test oracle may be provided by taking as the reference the global destination tables after loading the test data into the original system, and comparing said reference to the corresponding global destination tables after loading test data into the new system (e.g. after updating the data warehouse system software). Related are possible test oracles concerning test data that are automatically generated for smoke testing. In such case, it is sufficient to determine that the data warehouse application code is processed without error.

The second possible test oracle concerns testing with partly manually provided data by a testing person. In such case, the testing person has to specify the results to be expected after loading the data into the data warehouse. For example, the expected result may be specified in terms of the number of rows and/or specific contents of fields of a certain global destination table.

The system which implements the method of the present invention thereby provides the possibility to the testing person to specify such test oracle, e.g., in the form of SQL code. Furthermore scripts may be specified by the testing person to note test data, to execute data warehouse code, and then to investigate, by using the test oracle, if a test run delivered the foreseen / expected result. Depending on this result, an error or success message may be displayed.

In the following, the aspect of **business case driven test strategy** is described. The present method and system may manage business cases, also called requirements, for each version of a system under test. The business case driven test strategy evaluates which tables, columns, and paths are affected by differences between different versions of a system under test. If during testing, the test oracle determines differences beyond or in addition to the differences described by the business cases corresponding to the tested version of the system under test, such differences are marked specially and pointed out to the testing person as important information for the testing strategy and possibly indicative for possible errors in the program code under test.

When generating test data using the hybrid test data generation, the testing person associates the generated test data to certain business cases. The present system and method marks such test data that are associated to business cases and conversely business cases that are associated with test data. Like this, the testing person realizes those business cases for which test cases remain to be created and further which test cases have no association with business cases.

In the following, the aspect of **code test coverage** is described. The present system and method may determine for the different structural test methodologies the test coverage that is reached by the generated test data. Thus, when test data is generated, the paths used to perform the generation are stored. Covered paths and tables are marked correspondingly in the data flow graph. From such information, the testing person may derive important information for the testing strategy.

In the following, the aspect of **considering differences between two versions of metadata** is described. The present system and method may determine differences between two versions of metadata. For that purpose, internal data structures are created, that present the two versions and their differences for comparison:

- Tables and statements which are identical in the two versions will be marked as "unchanged" in the new version.

- If tables differ in their columns, e.g. the number of columns, the names of columns, the type of values stored in each column, they are marked as "changed" in the new version.
- If names of tables occur in the old but not in the new version, the corresponding tables are shown in the new version and marked as "deleted".
- If names of tables occur in the new but not in the old version, the corresponding tables are marked as "new" in the new version.
- If statements in both versions do not differ in their source and destination tables but differ in other aspects, they are marked as "changed" in the new version.
- If for a statement in the old version there is no corresponding statement in the new version with the same source and destination tables, said statement is shown in the new version and marked as "deleted".
- If, for a statement in the new version, there is no corresponding statement in the old version with the same source and destination tables, said statement is marked as "new" in the new version.

Differences in file names and line numbers are ignored when determining differences according to the above. Based on these differences, a testing person may derive important information for a test strategy. When test cases are executed automatically, the system analyzes the occurrence of differences versus previous versions, and alerts the testing person with corresponding hints, if the tables and statements involved in the testing experienced changes. Such procedure supports the testing person when analyzing and tracking errors.

In the following, the aspects of **determining and explaining problems during test data generation** is described. When a testing person triggers test data generation in the hybrid test data generation and the system and method are not able to generate test data based on the specifications, e.g. certain values of columns and/or predetermined path for which to generate test data, provided in the context of the hybrid test data generation, the system and method may provide and explain reasons for such behavior.

To determine such reason, the method for determining profits described earlier is applied with the following extension: during path search, all paths / path prefixes for which no data can be generated are stored. For such paths / path prefixes, the corresponding conditions are determined and analyzed which parts of such conditions are contradictory and thus cause the inability to generate test data. Such contradictory parts of the constraints are shown to the testing person to facilitate the analysis and the testing person's understanding about the reason for the inability to carry out the test data generation.

Said procedure may be applied, possibly interactively, while the testing person specifies input values of columns in the process of providing input to the hybrid test data generation. Hence the testing person can be aware of the first and possibly further input values which prevent successful test data generation.

In the following, advantageous technical effects and benefits of the present method and system for automated test data generation are described:

- Test data generation may occur fully automated from the metadata of the data warehouse application, including the source code of the application. This has the benefit that test data generation can occur in a highly efficient manner such that test data may always correspond and be compatible with the most recent version of the data warehouse application. This aspect is especially advantageous for smoke testing, where the functional equivalence between two versions of a data warehouse application should be tested.
- Test data may be provided without access to production data, thus avoiding privacy concerns and the technical effort to access production data, which may be encrypted and/or have a large volume.
- Test data generation does not require the specification of data generation rules, which are obtained with programming activity which may be complex, time-consuming, and/or resource intensely.
- Test data generation may involve SQL, which is a common and standardized programming and specification language for database systems. Thus, with the present method and system for test data generation, SQL may also be used generally as a specification language for the generation of test data, even outside the context of testing data ware house applications.
- Test data for negative testing may be generated automatically.
- The volume of generated test data may be scaled from a small number of test data records to larger numbers of test data records. This has the advantage that the effort of testing in terms of computational and storage resources required to carry out the testing may be scaled. Thus small and cost effective testing environments are possible.
- Optionally, manual amendment and specification of input data, constraints, and paths, from which test data is to be generated, can be used to control the test data generation process.

It will be understood by the skilled person that the embodiments described hereinbefore may be implemented by hardware, by software, or by a combination of software and hardware. The modules and functions described in connection with embodiments described previously may be as a whole or in part implemented by microprocessors or computers with associated storage and communication means which are suitably programmed such as to act in accordance with the methods explained in connection with the embodiments. An apparatus implementing an embodiment described previously may e.g. comprise computing device such as a server computer which is suitably programmed such that it is able to carry out the method for performing automatic test generation as described in the embodiments described previously.

According to an embodiment there is provided a computer program, either stored in a data carrier or in some other way embodied by some physical means such as a recording medium or a transmission link which when being executed on a computer enables the computer to operate in accordance with the embodiments described hereinbefore.

**Claims**

1. Computer-implemented method for automatic generation of test data for testing a data warehouse system comprising the steps of:

obtaining a source code of the data warehouse system to be tested;
transforming the source code into an intermediate representation;

wherein the intermediate representation includes an ordered set of statements, and
wherein a statement from the ordered set of statements specifies one or more data sources and/or one or more data destinations;

analysing the intermediate representation to obtain a flow graph and a set of constraints, wherein the flow graph includes:

a statement node corresponding to each statement of the ordered set of statements;
a source node corresponding to each of the one or more data sources;
a destination node corresponding to each of the one or more data destinations;
control-flow edges corresponding to a control-flow relation among the statements of the ordered set of statements;
input edges corresponding to an input relation among data sources and a statement; and
output edges corresponding to an output relation between a statement and data destinations;

wherein one or more constraints are associated with each node of the flow graph, and wherein the one or more constraints specifiy one of:

for a source node, a boolean condition that restricts the possible values obtained from the data source; or
for a statement node, a boolean condition that specifies a necessary precondition under which the statement can execute;

determining one or more flow paths in the flow graph;

wherein a flow path corresponds to a sequence of nodes and edges in the flow graph;

determining as combined constraints for each flow path the constraints associated with the nodes of the flow path combined by logical conjunction,
generating test data that meet the combined constraints of at least one of the one or more flow paths;
**characterized in that**
determining one or more flow paths comprises the following steps:

(1) starting with a path prefix being a node and the one or more constraints associated with the node;
(2) for all nodes in the flow graph corresponding to statements that are predecessors of the node most recently added to the path prefix, determine if the one or more constraints associated with the node have a solution when being combined by logical conjunction with the combined constraints of the path prefix;
(3a) if a solution exists, add the node to the path prefix to obtain a new path prefix, combine the one or more constraints of the node by logical conjunction with the combined constraints of the path prefix to obtain new combined constraints of the new path prefix and continue recursively at step (2),
(3b) otherwise continue with the next node at step (2);

(4) adding the sequence of nodes and edges in the path prefix as flow path to the one or more flow paths being determined if the node most recently added to the path prefix has no predecessor node.

2. The method of claim 1 wherein the steps of
generating test data and
determining if one or more constraints have a solution
are performed by a constraint solver.

3. The method according to any of the previous claims, wherein the path prefix at which the determining the one or more flow paths starts is a statement node that specifies a global data destination, wherein a global data destination is a data destination which is not specified as data source by any other statement.

4. The method according to any of the previous claims, wherein the adding of the sequence of nodes and edges in the path prefix as flow path to the one or more flow paths being determined is performed if the last node in the flow path specifies a global data destination, wherein a global data destination is a data destination which is not specified as data source by any other statement.

5. The method according to any of the previous claims, with the additional step of providing additional constraints as input before generating test data.

6. The method according to any of the previous claims, where one or more of the data sources and/or data destinations are marked as "control data";
wherein data sources marked as "control-data" contain actual data that is used as input for the step of determining one or more flow paths and the step of generating test data; and
wherein for data sources and destinations that are marked as "control data", no test data is generated.

7. The method according to any of the previous claims, with the additional steps of
creating a visual representation of the flow relation;
marking paths in the visual representation that correspond to flow paths for which test data is generated; and
displaying the visual representation and the marked paths to the user.

8. The method according to any of the previous claims, wherein the source code is specified in one or more programming languages.

9. The method according to any of the previous claims,
wherein the source code is specified in SQL,
wherein the statement is an SQL statement,
wherein the data source is an SQL table or a column thereof, and
wherein the data destination is an SQL table or a column thereof.

10. A computer system configured to perform a method according to one of claims 1 to 9.

11. A computer program product comprising computer program code which when being executed on a computer enables said computer to carry out a method according to one of claims 1 to 9.

12. A computer program comprising computer program code which when being executed on a computer enables said computer to carry out a method according to one of claims 1 to 9.

# Fig. 1

```
Start
```

110    Obtaining source code from a data
       warehouse application to be tested

120    Transforming the source code into
       an intermediate representation

130    Analyzing the intermediate representation to obtain a
       flow graph and a set of constraints

140    Determining one or more flow paths in the flow graph

150    Determining as combined constraints for each of the
       flow paths the constraints associated with the nodes
       of the flow path combined by logical conjunction

160    Generating test data that meet the combined
       constraints of at least one of the one or more flow
       paths

```
End
```

# Fig. 2

Testing Person
201

Test Data Generation
System 200

Metadata
Repository 261

Display and
Editor 251

Configuration
Data 252

Data Warehouse
Manager 262

Parser 210

Network 271

Analyzer 220

Test Data
Generator 230

Constraint
Solver 240

Network 272

Specific Test
Data 253

Database Management System 281

Test Data Store 282

# Fig. 3

Test Data Generation
System 300

Storage Device
320

ROM
330

Main Memory
340

Processing
Logic 350

Communication
Interface 360

Input Device
370

Output Device
380

Bus 310

Fig. 4

Fig. 5

# Fig. 6

# Fig. 7

table

data flow

SQL
statement

control flow

start or end node

# Fig. 8

# Fig. 9

extension for user-defined test data
(hybrid test data generation)

Europäisches
Patentamt

European
Patent Office

Office européen
des brevets

# EUROPEAN SEARCH REPORT

Application Number

EP 14 15 8651

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHAUDHURI S ET AL: "An overview of data warehousing and OLAP technology", SIGMOD RECORD, ACM, NEW YORK, NY, US, vol. 26, no. 1, 1 March 1997 (1997-03-01), pages 65-74, XP002115173, ISSN: 0163-5808, DOI: 10.1145/248603.248616 * page 2, right-hand column, paragraph 3 - page 3, left-hand column, paragraph 3; figure 1 * * page 5, left-hand column, last paragraph - right-hand column, paragraph 2 * | 1-12 | INV. G06F17/30 G06F11/36 |
| A | ALLEN F E ET AL: "A PROGRAM DATA FLOW ANALYSIS PROCEDURE", COMMUNICATIONS OF THE ACM, ASSOCIATION FOR COMPUTING MACHINERY, INC, UNITED STATES, vol. 19, no. 3, 1 March 1976 (1976-03-01), pages 137-147, XP008057876, ISSN: 0001-0782, DOI: 10.1145/360018.360025 * abstract * * page 137, right-hand column, paragraph 1 - page 140, left-hand column, paragraph 6 * | 1-12 | |

TECHNICAL FIELDS SEARCHED (IPC)

G06F

The present search report has been drawn up for all claims

| Place of search | Date of completion of the search | Examiner |
|---|---|---|
| Munich | 2 June 2014 | Herri, Edmond |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **TAHBILDAR ; KALITY.** Automated Test Data Generation Based On Individual Constraints and Boundary Value. *IJCSI International Journal of Computer Science,* September 2010, vol. 7 (5